# EUROPEAN PATENT APPLICATION

(11) **EP 4 546 528 A1**
(43) Date of publication of application: **30.04.2025**
(21) Application number: 22952517.5
(22) Date of filing: 29.07.2022
(51) Int. Cl.: H01M 50/244, H01M 50/249, H01M 50/258, H01M 10/613, H01M 10/6556

(54) **BOX BODY OF BATTERY, BATTERY, AND ELECTRIC DEVICE**

(71) Applicant: Contemporary Amperex Technology (Hong Kong) Limited, Hong Kong (HK)
(72) Inventor: YAO, Pengcheng, Ningde, Fujian 352100 (CN); XUE, Danyue, Ningde, Fujian 352100 (CN); WANG, Peng, Ningde, Fujian 352100 (CN); CHEN, Xingdi, Ningde, Fujian 352100 (CN)
(74) Representative: Ran, Handong
(86) International application number: PCT/CN2022/109118
(87) International publication number: WO 2024/021070

(57) **Abstract**

Embodiments of the present application provide a box body of a battery, a battery, and an electric device. The box body comprises a base plate and a plurality of side beams, the plurality of side beams are connected to the base plate, and an accommodating space is defined by the plurality of side beams and the base plate. At least one side beam comprises a beam main body and a reinforcing portion, the reinforcing portion protrudes out of the surface of the beam main body facing the accommodating space, the reinforcing portion is provided with a relief structure, and the relief structure is used for leaving components accommodated in the accommodating space. According to the embodiments of the present application, at least one side beam is provided with a reinforcing portion, so that the structural strength of the side beam is improved, and the risk of deformation of a battery is reduced; the reinforcing portion is disposed on the surface of a beam main body facing an accommodating space, so that the overall volume of the battery would not be increased due to the presence of the reinforcing portion; moreover, the distance between battery cells and side beams can be reduced, the adhesive strength between the battery cells and the side beams is improved, and thus the structural strength of the battery is enhanced.

## Description

### TECHNICAL FIELD

The present application relates to the technical field of batteries, and more specifically, to a box body of a battery, a battery, and an electrical apparatus.

### BACKGROUND

Currently, batteries are widely used in various electrical apparatuses such as vehicles. During the operation of some electrical apparatuses, movement or vibration is often involved. In this case, how to improve the structural strength of batteries is extremely important.

### SUMMARY OF THE INVENTION

The present application provides a box body of a battery, a battery, and an electrical apparatus, which can improve the structural strength of the battery.

According to a first aspect, an embodiment of the present application provides a box body of a battery, including a base plate and a plurality of side beams, the plurality of side beams are connected to the base plate, and an accommodating space is defined by the plurality of side beams and the base plate, where at least one side beam includes a beam main body and a reinforcing portion, the reinforcing portion protrudes from the surface of the beam main body facing the accommodating space, the reinforcing portion is provided with an avoidance structure, and the avoidance structure is configured to avoid components accommodated in the accommodating space.

In the embodiment of the present application, the reinforcing portion is arranged on the side beam, so that the thickness of the side beam at the position corresponding to the reinforcing portion is increased. The increase in thickness often means an increase in structural strength, so the compressive resistance of the side beam is improved, thereby reducing the risk of battery deformation. The reinforcing portion is arranged on the surface of the beam main body facing the accommodating space, and the existence of the reinforcing portion will not increase the overall volume of the battery, and can also reduce the distance between a battery cell and the side beam to improve the adhesive strength between the battery cell and the side beam, thereby reinforcing the structural strength of the battery.

In some embodiments, the reinforcing portion includes a plurality of protrusions arranged at intervals, and the plurality of protrusions are arranged at intervals along an extension direction of the beam main body.

In the embodiment of the present application, the plurality of protrusions are arranged at intervals in the extension direction of the beam main body, so that the gaps formed between two adjacent protrusions can be arranged in the extension direction of the beam main body, thereby avoiding more components or structures located inside the battery, and meeting the needs of the internal structure layout of the battery.

In some embodiments, the plurality of protrusions are arranged at equal intervals along the extension direction of the beam main body.

In the embodiment of the present application, the plurality of gaps formed by the plurality of protrusions can more easily avoid components inside the battery, such as heat exchange plates, and the equal interval arrangement is also conducive to standardizing the internal structure of the battery and improving the reliability of the internal structure layout of the battery.

In some embodiments, the avoidance structure includes a gap formed between two adjacent protrusions, and in the extension direction of the beam main body, the minimum width of the gap is L1 (1 mm ≤ L1 ≤ 1500 mm).

In the embodiment of the present application, by setting the distance L1 between two adjacent protrusions to be 1 mm to 1500 mm, it is ensured that the width of the gap is sufficient to meet the avoidance need, while ensuring that the side beam has certain structural strength to meet the actual use requirements of the battery.

In some embodiments, 5 mm ≤ L1 ≤ 20 mm.

In some embodiments, the protrusion includes a first plate body and a second plate body connected to each other, the first plate body is located on the side of the second plate body away from the base plate, and the first plate body intersects with the second plate body. The avoidance structure includes an avoidance space located on the side of the first plate body away from the base plate.

In the embodiment of the present application, the space between the battery cell and the beam main body can be reasonably used to ensure the compactness of the internal structure of the battery, and the risk of debonding between the side beam and the battery cell can be reduced to improve the use reliability of the battery.

In some embodiments, the second plate body extends along a thickness direction of the base plate and abuts against the base plate.

In the embodiment of the present application, the second plate body is configured to extend along the thickness direction of the base plate and abuts against the base plate, so that the second plate body can play a certain supporting role in a case that the battery is inverted, thereby improving the supporting capacity of the side beam and ensuring the overall compressive resistance of the battery.

In some embodiments, an accommodating cavity is defined by the first plate body, the second plate body and the beam main body together, and the protrusion further includes a reinforcing rib arranged in the accommodating cavity.

In the embodiment of the present application, the reinforcing ribs are arranged in the protrusions, thereby improving the strength and compressive resistance of each protrusion, and further enhancing the overall structural strength of the battery.

In some embodiments, the plurality of side beams include two first side beams and two second side beams, the two first side beams are arranged at an interval along a width direction of the box body, and the two second side beams are arranged at an interval along a length direction of the box body. Each second side beam is connected to the two first side beams, and each first side beam includes the beam main body and the reinforcing portion.

In the embodiment of the present application, the reinforcing portion is additionally arranged in the first side beam, which increases the structural strength of the first side beam and reduces the distance between the first side beam and the battery cell, thereby reducing the risk of the debonding problem.

In some embodiments, the maximum size of the box body in the length direction is L2, and L1 and L2 meet: 0.0002≤L1/L2≤0.5.

In the embodiment of the present application, L1/L2 is set between 0.0002 and 20, so that the internal layout of the battery is reasonable, and the requirement of the structural strength of the battery can be met.

In some embodiments, 0.001<L1/L2≤0.3.

According to a second aspect, an embodiment of the present application provides a battery, including the box body according to any of the above embodiments and battery cells, and the battery cells are accommodated in the accommodating space.

In some embodiments, the battery includes a heat management component, the heat management component is accommodated in the accommodating space, and the avoidance structure is configured to avoid at least a portion of the heat management component.

In the embodiment of the present application, the reinforcing portion is provided with the avoidance structure for avoiding the heat management component. The existence of the reinforcing portion can improve the structural strength of the side beam and reduce the risk of battery deformation without affecting the heat management component. Furthermore, the existence of the reinforcing portion will not increase the overall volume of the battery, can also reduce the distance between the battery cell and the side beam, reduce the width of the colloid between the battery cell and the side beam and reduce the risk of the debonding problem, and is suitable for different operating conditions such as movement or vibration.

In some embodiments, the heat management component includes a plurality of heat exchange plates arranged at intervals, and battery cells are arranged between adjacent heat exchange plates. The reinforcing portion includes a plurality of protrusions arranged at intervals, the avoidance structure includes gaps located between two adjacent protrusions, and the gaps are configured to accommodate end portions of the heat exchange plates.

In the embodiment of the present application, the plurality of protrusions are arranged at intervals, so that the gaps capable of accommodating the end portions of the heat exchange plates are formed between adjacent protrusions. Furthermore, the existence of the gaps not only has an avoidance effect, but also has limiting and positioning effects on the positions of the heat exchange plates and the battery cells to a certain extent. Therefore, during the preparation process of the battery, the positions of the battery cells can be determined by inserting the end portions of the heat exchange plates into the gaps.

In some embodiments, the heat management component includes manifolds, the plurality of heat exchange plates are communicated by the manifolds, and the manifold is at least partially located in the avoidance space.

In the embodiment of the present application, the manifolds can achieve the communication of the plurality of heat exchange plates. The manifold is usually located between the battery cell and the beam main body, and the reinforcing portion is also located between the battery cell and the beam main body. On this basis, in the embodiment of the present application, the first plate body is tilted relative to the second plate body so as to form the avoidance space for avoiding the manifolds on the side of the first plate body away from the base plate, thereby effectively using the space between the battery cell and the beam main body.

According to a third aspect, an embodiment of the present application provides an electrical apparatus, including the battery according to any of the above embodiments, and the battery is configured to provide electric energy.

### DESCRIPTION OF DRAWINGS

In order to illustrate the technical solutions of the embodiments of the present application more clearly, the accompanying drawings required in the embodiments of the present application are briefly introduced below. Obviously, the accompanying drawings described below are only some embodiments of the present application. For those of ordinary skill in the art, other accompanying drawings can also be obtained according to the accompanying drawings without any creative efforts.
FIG. 1 is a schematic structural diagram of a vehicle provided in some embodiments of the present application;
FIG. 2 is a schematic exploded diagram of a battery provided in some embodiments of the present application;
FIG. 3 is a schematic structural diagram of a side beam in the battery shown in FIG. 2;
FIG. 4 is an enlarged schematic structural diagram of a region Q in FIG. 3;
FIG. 5 is a schematic structural diagram of a heat management component in a battery provided in some embodiments of the present application;
FIG. 6 is a schematic structural diagram of a side beam in a battery provided in some embodiments of the present application; and
FIG. 7 is a schematic structural diagram of a battery provided in some embodiments of the present application.

In the accompanying drawings, the figures are not drawn to the actual scale.

In the accompanying drawings:
1000. vehicle;
100. battery; 200. controller; 300. motor; 400. box body;
11. base plate; 12. side beam; 12a. first side beam; 12b. second side beam; 121. beam main body; 122. reinforcing portion; 1221. protrusion; 1221a. first plate body; 1221b. second plate body; 1221c. accommodating cavity; 1221d. reinforcing rib; 123. avoidance structure; 1231. gap; 1232. avoidance space; 13. accommodating space; 14. cover plate;
20. battery cell;
30. heat management component; 31. heat exchange plate; 32. manifold;
X. width direction; Y. length direction; Z. thickness direction.

### DETAILED DESCRIPTION

In order to make the objectives, technical solutions and advantages of the embodiments of the present application clearer, the technical solutions in the embodiments of the present application will be clearly described below with reference to the accompanying drawings in the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as commonly understood by those skilled in the art of the present application. The terms used in the specification of the present application are only for the purpose of describing specific embodiments, but are not intended to limit the present application. The terms "include" and "have" and any variants thereof in the specification and claims of the present application and in the description of the above accompanying drawings are intended to cover non-exclusive inclusions. The terms "first", "second", etc. in the specification and claims of the present application or the above accompanying drawings are used to distinguish different objects, rather than to describe a specific order or primary-secondary relationship.

The reference to "embodiments" in the present application means that specific features, structures or characteristics described in conjunction with embodiments may be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that unless otherwise clearly specified and defined, the terms "installation", "connected", "connection" and "attachment" should be broadly understood. For example, the connection may be fixed connection, detachable connection or integrated connection, or may be direct connection, indirect connection through an intermediate, or internal communication of two elements. For those of ordinary skill in the art, the specific meanings of the above terms in the present application can be understood according to specific situations.

In the present application, the term "and/or" is only an association relationship describing associated objects, which means that there may be three relationships. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other sizes of various components in the embodiments of the present application shown in the accompanying drawings, as well as the overall thickness, length, width and other sizes of an integrated apparatus are for illustrative purposes only, and should not constitute any limitation to the present application.

The term "a plurality of" in the present application refers to two or more (including two).

In the present application, the battery cell may include a lithium-ion secondary battery cell, a lithium-ion primary battery cell, a lithium-sulfur battery cell, a sodium/lithium-ion battery cell, a sodium-ion battery cell, a magnesium-ion battery cell, or the like, which is not limited in the embodiments of the present application. The battery cell may be in a cylindrical shape, a flat shape, a cuboid shape or other shapes, which is also not limited in the embodiments of the present application. Battery cells are generally divided into three types according to packaging manners: cylindrical battery cells, square battery cells and pouch cells, which are not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box body for encapsulating one or more battery cells. The box body can prevent liquids or other foreign matters from affecting the charging or discharging of the battery cell.

The battery cell includes an electrode assembly and an electrolytic solution, and the electrode assembly is composed of a positive electrode plate, a negative electrode plate and a separator. The battery cell operates mainly relying on movement of metal ions between the positive electrode plate and the negative electrode plate. The positive electrode plate includes a positive electrode current collector and a positive electrode active material layer, the positive electrode active material layer is coated on a surface of the positive electrode current collector, the positive electrode current collector which is not coated with the positive electrode active material layer protrudes from the positive electrode current collector coated with the positive electrode active material layer, and the positive electrode current collector which is not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, the negative electrode active material layer is coated on a surface of the negative electrode current collector, the negative electrode current collector which is not coated with the negative electrode active material layer protrudes from the negative electrode current collector which is coated with the negative electrode active material layer, and the negative electrode current collector which is not coated with the negative electrode active material layer is used as a negative tab. The material of the negative electrode current collector may be copper, and the negative electrode active material may be carbon, silicon, or the like. **In** order to ensure that no fusing occurs when a heavy current passes, there are a plurality of positive tabs which are stacked together, and there are a plurality of negative tabs which are stacked together. The material of the separator may be polypropylene (PP), polyethylene (PE), or the like. In addition, the electrode assembly may be of a wound structure or a stacked structure, which is not limited in the embodiments of the present application.

For an electrical apparatus such as a vehicle, the battery moves or vibrates along with the electrical apparatus. The applicant has noticed that during long-term use of the battery, the side beams of the box body in the battery are prone to deformation, resulting in insufficient structural strength of the battery.

Through research, the applicant has found that the above problem occurs because: inside the battery, the battery cell is fixed to the base plate by bonding, and part of the colloid between the battery cell and the base plate overflows to the side of the battery cell, thereby achieving bonding between the side beam and the battery cell. However, due to the limitation of the internal structure of the battery, the distance between the battery cell and the side beam is too large. Under vibration or other operating conditions, the colloid between the battery cell and the side beam is prone to debonding so that the side beam and the battery cell cannot be connected as a whole. Moreover, the side beams of the box body of the battery are usually relatively thin, resulting in insufficient side wall stiffness. Therefore, when subjected to external impact, bumps and dents may easily occur on the outside of the side wall. Therefore, how to improve the structural strength of the battery is an urgent problem to be solved.

Based on the above problems found by the applicant, the present application provides a box body of a battery. The box body includes a base plate and a plurality of side beams, the plurality of side beams are connected to the base plate, and an accommodating space is defined by the plurality of side beams and the base plate, where at least one side beam includes a beam main body and a reinforcing portion, the reinforcing portion protrudes from the surface of the beam main body facing the accommodating space, the reinforcing portion is provided with an avoidance structure, and the avoidance structure is configured to avoid components accommodated in the accommodating space.

In the present application, the reinforcing portion is arranged on at least one side beam, so that the thickness of the side beam at the position corresponding to the reinforcing portion is increased. The increase in thickness often means an increase in structural strength, so the compressive resistance of the side beam is improved, thereby reducing the risk of battery deformation. The reinforcing portion is arranged on the surface of the beam main body facing the accommodating space, and the existence of the reinforcing portion will not increase the overall volume of the battery, and can also reduce the distance between the battery cell and the side beam to improve the adhesive strength between the battery cell and the side beam, thereby reinforcing the structural strength of the battery.

The technical solutions described in the embodiments of the present application are applicable to electrical apparatuses using batteries. The electrical apparatuses may be battery vehicles, electric vehicles, ships, spacecrafts, electric toys, electric tools, and the like, where the spacecrafts may be airplanes, rockets, space shuttles, spaceships, and the like; the electric toys may include fixed or mobile electric toys, such as electric vehicle toys, electric ship toys and electric airplane toys; and the electric tools may include metal cutting electric tools, grinding electric tools, assembly electric tools and railway electric tools, such as electric drills, electric grinders, electric wrenches, electric screwdrivers, electric hammers, electric impact drills, concrete vibrators and electric planers.

The battery cells described in the embodiments of the present application are not limited to be applicable to the electrical apparatuses described above. However, for the sake of brevity, the following embodiments are all described by taking an electric vehicle as an example.

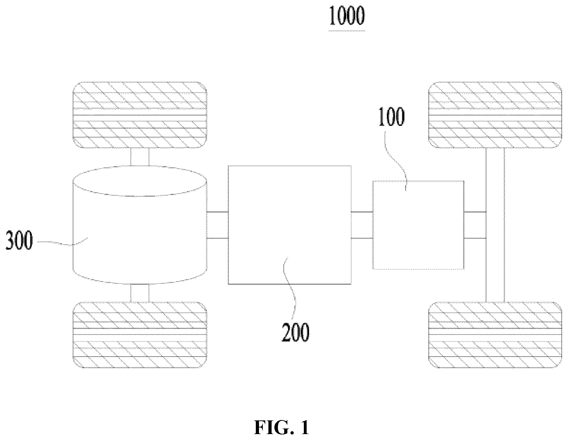

Referring to FIG. 1, the vehicle 1000 may be a fuel vehicle, a gas vehicle, or a new energy vehicle. The new energy vehicle may be an all-electric vehicle, a hybrid electric vehicle, an extended range electric vehicle, or the like. A battery 100 may be arranged inside the vehicle 1000. Specifically, for example, the battery 100 may be arranged at the bottom or head or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. For example, the controller 200 is configured to control the battery to supply power to the motor 300. The battery can be used for starting and navigating the vehicle 1000. Of course, the battery 100 can also be used for driving the vehicle 1000 to run, and replacing or partially replacing fuel or natural gas to provide drive for the vehicle 1000.

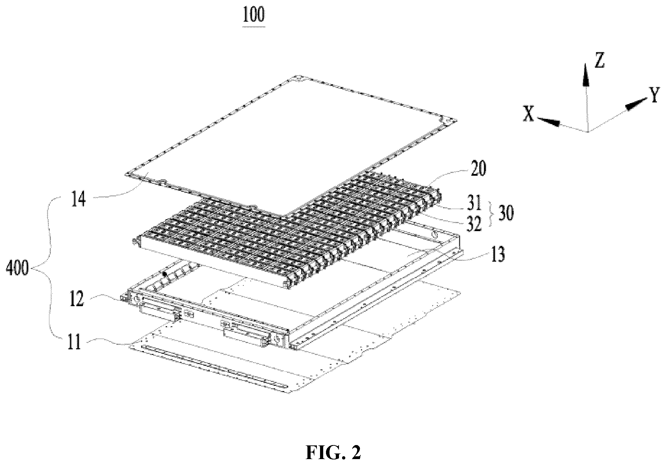

Referring to FIG. 2, the battery includes a box body 400 and battery cells 20, and the battery cells 20 are accommodated in the box body 400.

There may be one or more battery cells 20 in the battery 100. If there are a plurality of battery cells 20, the plurality of battery cells 20 may be connected in series or parallel or in a mixed connection, where the mixed connection means that the plurality of battery cells 20 are connected in both series and parallel. The plurality of battery cells 20 may be directly connected in series, parallel or series and parallel together, and then, the whole formed by the plurality of battery cells 20 is accommodated in the box body 400. Of course, the plurality of battery cells 20 may be connected in series, parallel or series and parallel first to form a battery module (not shown in the figures), and then, a plurality of battery modules are connected in series, parallel or series and parallel to form a whole which is accommodated in the box body 400.

The structure of the box body 400 is described in detail below with reference to the accompanying drawings.

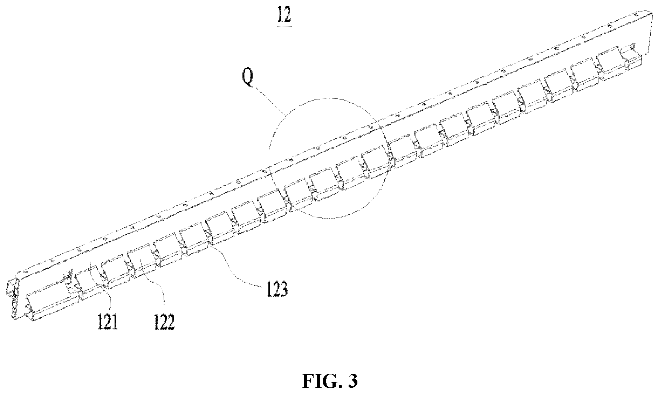

An embodiment of the present application provides a box body 400 of a battery. Referring to FIG. 2 and FIG. 3, the box body 400 includes a base plate 11 and a plurality of side beams 12, the plurality of side beams 12 are connected to the base plate 11, and an accommodating space 13 is defined by the plurality of side beams 12 and the base plate 11, where at least one side beam 12 includes a beam main body 121 and a reinforcing portion 122, the reinforcing portion 122 protrudes from the surface of the beam main body 121 facing the accommodating space 13, the reinforcing portion 122 is provided with an avoidance structure 123, and the avoidance structure 123 is configured to avoid components accommodated in the accommodating space 13.

The base plate 11 may be a bottom plate of the box body 400. The accommodating space 13 is defined by the base plate 11 and the plurality of side beams 12 together. The battery cells 20 are arranged in the accommodating space 13. The base plate 11 is configured to carry and fix the battery cells 20. Exemplarily, the battery cell 20 is fixed to the base plate 11 by bonding, and part of the colloid will overflow between the battery cell 20 and the side beam 12 to fix the battery cell 20 and the side beam 12.

The plurality of side beams 12 are connected end to end in sequence to define the side walls of the box body 400. The plurality of side beams 12 may be of an integrated structure or a split structure, and together form an annular structure by bonding, welding, plugging, bolted connection, etc. The annular structure includes but is not limited to a square ring and a circular ring. Furthermore, the plurality of side beams 12 are also connected to the base plate 11, and connection methods include but are not limited to welding, bonding, and bolted connection.

In the embodiment of the present application, each side beam 12 includes a beam main body 121, but only one of the plurality of side beams 12 may include a reinforcing portion 122. It is also possible that part or all of the side beams 12 include the reinforcing portions 122, which is not limited in the embodiment of the present application. The reinforcing portions 122 are additionally arranged in at least part of the side beams 12. The reinforcing portion 122 is connected to the beam main body 121. The connection methods between the reinforcing portion 122 and the beam main body 121 include but are not limited to welding, bonding, and bolted connection. The arrangement of the reinforcing portion 122 can increase the strength of the side beam 12, improve the overall strength and impact resistance of the side beam 12, and reduce the risk of deformation of the side beam 12.

The reinforcing portion 122 is arranged on the surface of the beam main body 121 facing the accommodating space 13. This design can improve the strength of at least part of the side beams 12 without increasing the overall volume of the battery, thereby ensuring the structural strength of the battery. Furthermore, the existence of the reinforcing portion 122 can reduce the distance between the battery cell 20 and the side beam 12 to improve the adhesive strength between the battery cell 20 and the side beam 12, thereby enhancing the structural strength of the battery.

Due to the limitation of the internal structure layout of the battery, some components are located between the battery cell 20 and the beam main body 121, resulting in a too large distance between the battery cell 20 and at least a portion of the beam main body 121. In order to prevent the reinforcing portion 122 from interfering with the components in the battery, an avoidance structure 123 is provided in the embodiment of the present application. The avoidance structure 123 is configured to avoid the components of the battery accommodated in the accommodating space 13. The avoidance structure 123 includes but is not limited to a hole, a groove, a notch or other structures.

The avoidance structure 123 is configured to avoid at least part of the components located in the accommodating space 13 to ensure that the internal layout of the battery is reliable. The specific structures of the reinforcing portion 122 and the avoidance structure 123 need to be determined according to the internal layout of the battery, which is not limited in the embodiment of the present application.

In the embodiment of the present application, the reinforcing portion 122 is arranged on at least one side beam 12, so that the thickness of the side beam 12 at the position corresponding to the reinforcing portion 122 is increased. The increase in thickness often means an increase in structural strength, so the compressive resistance of the side beam 12 is improved, thereby reducing the risk of battery deformation. The reinforcing portion 122 is arranged on the surface of the beam main body 121 facing the accommodating space 13, and the existence of the reinforcing portion 122 will not increase the overall volume of the battery, and can also reduce the distance between the battery cell 20 and the side beam 12 to improve the adhesive strength between the battery cell and the side beam, thereby improving the overall structural strength of the battery.

Furthermore, the box body 400 may further include a cover plate 14 in addition to the base plate 11 and the side beam 12. The base plate 11 and the cover plate 14 are arranged at an interval in a thickness direction Z of the base plate 11.

Exemplarily, the battery further includes a heat management component 30 in addition to the battery cell 20 inside. The heat management component 30 is configured to adjust the temperature of the battery cell 20 inside the battery to ensure that the battery cell 20 can maintain a suitable temperature for operation.

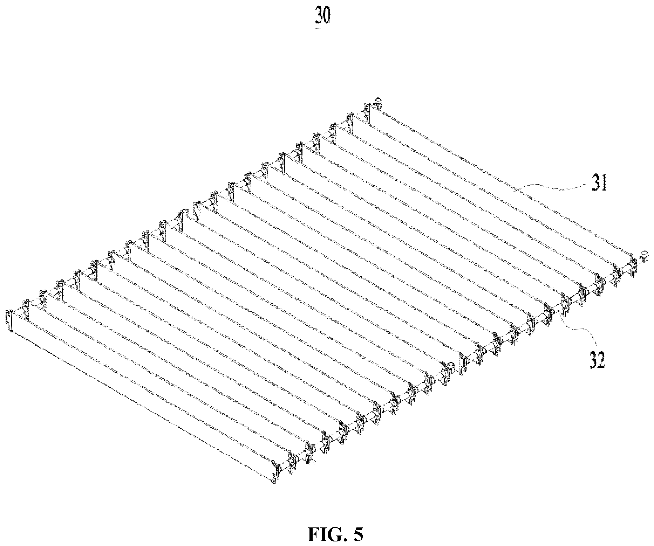

As shown in FIG. 5, the heat management component 30 includes heat exchange plates 31 and manifolds 32 for connecting a plurality of heat exchange plates 31. The heat exchange plate 31 is attached to or arranged adjacent to the battery cell 20, and is a main component for adjusting the temperature of the battery cell 20. There is usually a channel for a fluid to pass through inside the heat exchange plate 31. When the battery needs to be cooled, a cold fluid can be delivered to the heat exchange plate 31, and the cold fluid flows in the channel and takes away part of the heat of the battery cell 20, thereby achieving the cooling operation. When the battery needs to be heated, a hot fluid can be delivered to the heat exchange plate 31, and the hot fluid flows in the channel and provides part of the heat to the corresponding battery cell 20, thereby achieving the heating operation.

The manifold 32 is in communication with the channel of the heat exchange plate 31, and is configured to deliver or transfer cold and hot fluids to one or more heat exchange plates 31. The manifold 32 is usually located between the battery cell 20 and the side beam 12. Due to the existence of the manifold 32, the distance between the battery cell 20 and the beam main body is too large. However, the colloid between the battery cell 20 and the beam main body is difficult to meet the need of fixing the battery cell 20, so it is easy to cause problems such as debonding under operating conditions such as movement or vibration. Optionally, the avoidance structure 123 is configured to avoid the heat management component 30 in the battery.

It should be noted that in the embodiment of the present application, the reinforcing portion 122 may be a continuous strip-shaped structure and is fixed to the beam main body, or may be composed of multiple parts and arranged side by side on the beam main body, which is not limited in the embodiment of the present application.

In some embodiments, referring to FIG. 2 to FIG. 4, the reinforcing portion 122 includes a plurality of protrusions 1221 arranged at intervals, and the plurality of protrusions 1221 are arranged at intervals along an extension direction of the beam main body 121.

The plurality of protrusions 1221 are mounted on the same beam main body 121, and mounting methods include but are not limited to bonding, welding, and bolted connection. The sizes and shapes of the plurality of protrusions 1221 may be the same or different, as long as each protrusion 1221 is arranged on the surface of the beam main body facing the accommodating space 13 and protrudes to a direction away from the beam main body 121. The arrangement manner of the plurality of protrusions 1221 is not limited in the embodiment of the present application. Exemplarily, the plurality of protrusions 1221 may be arranged side by side along the thickness direction Z of the base plate 11.

The extension direction of the beam main body 121 is the length direction of the beam main body 121, and the plurality of protrusions 1221 are arranged at intervals along the extension direction of the beam main body 121, that is, the plurality of protrusions 1221 are arranged in parallel in the extension direction of the beam main body 121. The lengths of the protrusions 1221 in the extension direction of the beam main body 121 may be the same or different, and the spacing distances between adjacent protrusions 1221 may also be the same or different.

The plurality of protrusions 1221 are arranged at intervals to form gaps 1231 between adjacent protrusions 1221, and the gaps 1231 are configured to avoid some structures in the battery. Exemplarily, the gap 1231 is configured to avoid the heat exchange plate 31 in the heat management component 30 in the battery, at least part of the end portion of the heat exchange plate 31 can penetrate into the gap 1231, and the gap 1231 is configured to accommodate the end portion of the heat exchange plate. In addition to playing an avoidance role, the arrangement of the gap 1231 also plays a limiting role to a certain extent, so as to limit the movement of the structure in the gap 1231, thereby ensuring the stability of the internal structure of the battery in the case of movement or vibration.

When the battery includes a plurality of battery cells 20, generally, the plurality of battery cells 20 are arranged side by side along the extension direction of the beam main body 121. Similarly, a plurality of components located inside the battery may also be arranged side by side along the extension direction of the beam main body 121. Therefore, on this basis, in the embodiment of the present application, the plurality of protrusions 1221 are arranged at intervals in the extension direction of the beam main body 121, so that the gaps 1231 formed between two adjacent protrusions 1221 can be arranged in the extension direction of the beam main body 121, thereby avoiding more components or structures located inside the battery, and meeting the needs of the internal structure layout of the battery.

In some embodiments, the plurality of protrusions 1221 are arranged at equal intervals along the extension direction of the beam main body 121, and the minimum width L1 of the gap formed by two adjacent protrusions 1221 remains consistent.

The gap 1231 in this design is suitable for avoiding components arranged at equal intervals inside the battery. Exemplarily, when there are a plurality of battery cells 20 in the battery, a heat exchange plate 31 is located between adjacent battery cells 20. It can be seen from the above that the plurality of battery cells 20 are arranged along the extension direction of the beam main body 121, and the battery cells 20 are usually arranged at equal intervals. In summary, the plurality of **heat exchange** plates 31 are also arranged at equal intervals along the extension direction of the beam main body 121.

Therefore, in the embodiment of the present application, the plurality of protrusions 1221 are arranged at equal intervals along the extension direction of the beam main body 121, so that the plurality of gaps 1231 formed by the plurality of protrusions 1221 can more easily avoid components inside the battery, such as the heat exchange plates 31, and the equal interval arrangement is also conducive to standardizing the internal structure of the battery and improving the reliability of the internal structure layout of the battery.

In some embodiments, the avoidance structure 123 includes gaps 1231 formed between two adjacent protrusions 1221, and in the extension direction of the beam main body, the minimum width of the gap is L1 (1 mm ≤ L1 ≤ 1500 mm). Exemplarily, L1 is one of 1 mm, 10 mm, 100 mm, 1000 mm, and 1500 mm.

The distance between two adjacent protrusions 1221 is the minimum width L1 of the gap 1231. If the width L1 is too small, it means that the width of the gap 1231 is too small, which may cause the component in the battery to be unable to enter the gap 1231, thereby failing to play an avoidance role. If the width L1 is too large, it means that the total extent of each protrusion 1221 in the extension direction of the beam main body 121 is too small, that is, the size of the protrusion 1221 is too small. In this case, the reinforcing effect of the reinforcing portion 122 is insufficient, and the battery still has the problem of insufficient structural strength.

In the embodiment of the present application, the minimum width L1 of the gap 1231 is set between 1 mm and 1500 mm, thereby ensuring that the width of the gap 1231 is sufficient to meet the avoidance need, and ensuring that the side beam 12 has certain structural strength to meet the actual use requirements of the battery. Further, optionally, 5 mm ≤ L1 ≤ 20 mm. Exemplarily, L1 is one of 5 mm, 10 mm, 15 mm, and 20 mm.

In some embodiments, the protrusion 1221 includes a first plate body 1221a and a second plate body 1221b connected to each other, the first plate body 1221a is located on the side of the second plate body 1221b away from the base plate 11, and the first plate body 1221a intersects with the second plate body 1221b. The avoidance structure 123 includes an avoidance space 1232 located on the side of the first plate body 1221a away from the base plate 11.

Referring to FIG. 2, FIG. 3 and FIG. 6, the protrusion 1221 includes a first plate body 1221a and a second plate body 1221b. The first plate body 1221a and the second plate body 1221b are connected to each other. The first plate body 1221a and the second plate body 1221b may be of an integrated structure or may be connected and fixed by welding, bonding, etc. The second plate body 1221b is closer to the base plate 11 than the first plate body 1221a. The second plate body 1221b may be designed to be separated from the base plate 11, or may be in direct contact with the base plate 11 and fixed as a whole.

The first plate body 1221a and the second plate body 1221b both have a plate-shaped structure, and the first plate body 1221a intersects with the second plate body 1221b. The intersection here means that the plane corresponding to the first plate body 1221a and the plane corresponding to the second plate body 1221b are not parallel and form a certain included angle. The specific directions of the planes corresponding to the first plate body 1221a and the second plate body 1221b are not limited in the embodiment of the present application.

Both the first plate body 1221a and the second plate body 1221b can achieve the effect of enhancing the strength of the side beam 12, and some components inside the battery are located between the battery cell 20 and the beam main body 121. In order to avoid such components, in the embodiment of the present application, the first plate body 1221a is tilted relative to the second plate body 1221b to form an avoidance space 1232 on the side of the first plate body 1221a away from the second plate body 1221b.

It should be noted that the avoidance space 1232 is framed by dotted lines in the figure, but the shape and size of the avoidance space 1232 are not limited to those shown in the figure, that is, the avoidance space 1232 in the figure does not constitute a limitation on the shape and size of the avoidance space 1232 in the embodiment of the present application. Optionally, the manifold 32 in the battery is at least partially located in the avoidance space 1232.

According to this design, the space between the battery cell 20 and the beam main body can be reasonably used to ensure the compactness of the internal structure of the battery, and the risk of debonding between the side beam 12 and the battery cell 20 can be reduced to improve the use reliability of the battery.

In some embodiments, the second plate body 1221b extends along a thickness direction Z of the base plate 11 and abuts against the base plate 11.

The base plate 11 is the base of the box body and can be bonded and fixed to the battery cell 20. However, when the battery is actually used, the battery needs to be inverted in some cases. In this case, the base plate 11 is located above the battery cell 20. In this case, the side beam 12 plays a role in supporting the base plate 11 and applying an external force to the base plate 11.

On this basis, in the embodiment of the present application, the second plate body 1221b is configured to extend along the thickness direction Z of the base plate 11 and abuts against the base plate 11, so that the second plate body 1221b can play a certain supporting role in a case that the battery is inverted, thereby improving the supporting capacity of the side beam 12 and ensuring the overall compressive resistance of the battery.

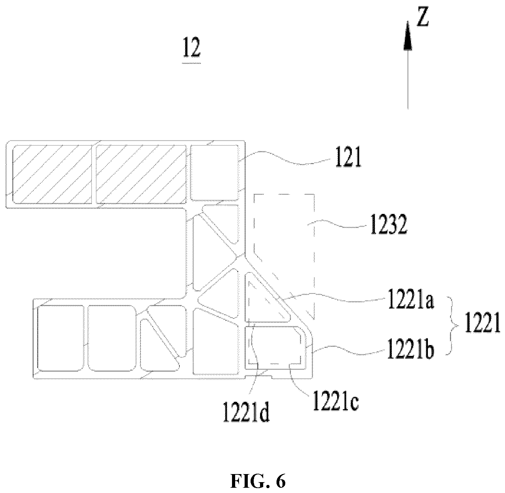

In some embodiments, as shown in FIG. 2 and FIG. 6, an accommodating cavity 1221c is defined by the first plate body 1221a, the second plate body 1221b and the beam main body together, and the protrusion 1221 further includes a reinforcing rib 1221d arranged in the accommodating cavity 1221c.

The first plate body 1221a, the second plate body 1221b and the beam main body together define the accommodating cavity 1221c. Meanwhile, the first plate body 1221a and the second plate body 1221b also separate the accommodating cavity 1221c from the accommodating space 13. The size and shape of the accommodating cavity 1221c need to be determined according to the positions and angles of the first plate body 1221a and the second plate body 1221b relative to the beam main body 121. Optionally, the accommodating cavity 1221c may be of a right-angled trapezoidal structure.

The reinforcing rib 1221d is arranged in the accommodating cavity 1221c. The reinforcing rib 1221d may include one or more reinforcing ribs, and an end portion of each reinforcing rib may be connected to any one of the first plate body 1221a, the second plate body 1221b and the beam main body 121. Furthermore, the reinforcing ribs 1221d in each protrusion 1221 may be the same or different. In the embodiment of the present application, the reinforcing ribs 1221d are arranged in the protrusions 1221, thereby improving the strength and compressive resistance of each protrusion 1221, and further enhancing the overall structural strength of the battery.

In some optional embodiments, reinforcing ribs may also be arranged inside the beam main body 121.

In some embodiments, referring to FIG. 2, FIG. 3 and FIG. 7, the plurality of side beams 12 include two first side beams 12a and two second side beams 12b, the two first side beams 12a are arranged at an interval along a width direction X of the box body, the two second side beams 12b are arranged at an interval along a length direction Y of the box body, and the length direction X intersects with the width direction Y. Each second side beam 12b is connected to the two first side beams 12a, and each first side beam 12a includes the beam main body 121 and the reinforcing portion 122.

The width direction X and the length direction Y are respectively the extension direction of the narrow edge and the direction of the long edge of the box body. Exemplarily, the width direction X is perpendicular to the length direction Y.

The two first side beams 12a extend along the length direction Y and are arranged side by side in the width direction X. The two second side beams 12b extend along the width direction X and are arranged in the length direction Y. The two first side beams 12a and the two second side beams 12b are connected to each other and define the accommodating space 13. Regarding the extension direction of the side beam 12 mentioned in the above embodiment, when the side beam 12 is the first side beam 12a, the extension direction of the side beam 12 is the length direction Y; and when the side beam 12 is the second side beam 12b, the extension direction of the side beam 12 is the width direction X.

As can be seen from the foregoing, the existence of the reinforcing portion 122 is due to the internal components of the battery occupying the space between the battery cell 20 and the beam main body 121, thereby increasing the distance between the battery cell 20 and the beam main body 121, which is prone to debonding and insufficient structural strength. Exemplarily, for the manifold 32 located between the battery cell 20 and the beam main body 121, the manifold 32 may cause the above problems. Meanwhile, the manifold 32 is usually arranged on one side or both sides of the battery cell 20 in the width direction X, that is, the manifold 32 may cause the distance between the beam main body in the first side beam 12a and the battery cell 20 to be too large.

On this basis, in the embodiment of the present application, the reinforcing portion 122 is additionally arranged in the first side beam 12a, which increases the structural strength of the first side beam 12a and reduces the distance between the first side beam 12a and the battery cell 20, thereby reducing the risk of the debonding problem.

It should be noted that the second side beam 12b may include only the beam main body 121 or may include both the beam main body 121 and the reinforcing portion 122, which is not limited in the embodiment of the present application.

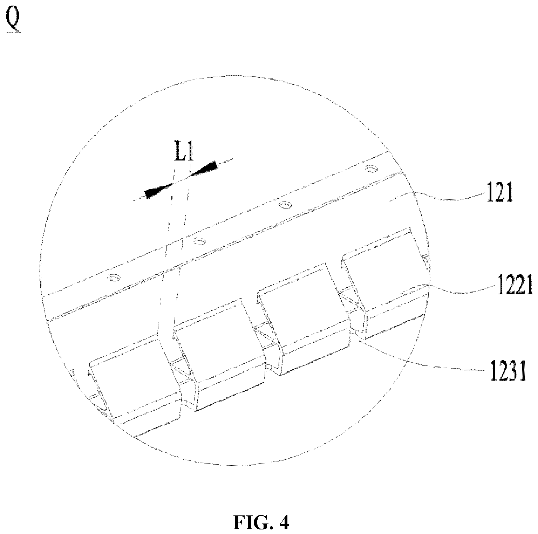

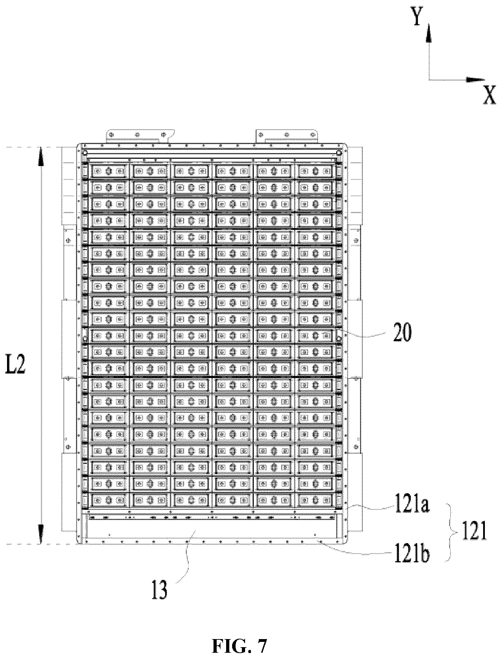

In some embodiments, referring to FIG. 4 and FIG. 7, the maximum size of the box body in the length direction Y is L2, and L1 and L2 meet: 0.0002≤L1/L2≤0.5. Exemplarily, L1/L2 is one of 0.0002, 0.0005, 0.005, 0.02, and 0.5.

L1/L2 that is too large or too small indicates that there is a problem with the internal structure layout of the battery. Specifically, when L1/L2 is too small, it is difficult for components in the battery to be inserted into the gap 1231 between adjacent protrusions 1221, thereby causing structural layout inconsistencies. When L1/L2 is too large, it means that the size of the protrusion 1221 is too small and cannot meet the requirement of the structural strength.

Therefore, in the embodiment of the present application, L1/L2 is set between 0.0002 and 0.5, so that the internal layout of the battery is reasonable, and the requirement of the structural strength of the battery can be met. Optionally, 0.001<L1/L2≤0.3. Exemplarily, L1/L2 is one of 0.001, 0.01, 0.1, and 0.3.

According to a second aspect, an embodiment of the present application provides a battery. As shown in FIG. 2, the battery includes the box body 100 according to any of the above embodiments and battery cells 20. The battery cells 20 are accommodated in an accommodating space 13.

It should be noted that the battery provided in the embodiment of the present application has the beneficial effects of the box body 400 in any of the above embodiments. Specifically, referring to the above description for the box body 400, details are not repeated in the embodiment of the present application.

In some embodiments, as shown in FIG. 2 to FIG. 5, the battery includes a heat management component 30, the heat management component 30 is accommodated in the accommodating space 13, and the avoidance structure 123 is configured to avoid at least a portion of the heat management component 30.

In the embodiment of the present application, the reinforcing portion 122 is provided with the avoidance structure 123 for avoiding the heat management component 30. The existence of the reinforcing portion 122 can improve the structural strength of the side beam 12 and reduce the risk of battery deformation without affecting the heat management component 30. Furthermore, the existence of the reinforcing portion 122 will not increase the overall volume of the battery, can also reduce the distance between the battery cell 20 and the side beam 12, reduce the width of the colloid between the battery cell 20 and the side beam 12 and reduce the risk of the debonding problem, and is suitable for different operating conditions such as movement or vibration.

**In** some embodiments, the heat management component 30 includes a plurality of heat exchange plates 31 arranged at intervals, and battery cells 20 are arranged between adjacent heat exchange plates 31. The reinforcing portion 122 includes a plurality of protrusions 1221 arranged at intervals, the avoidance structure 123 includes gaps 1231 located between two adjacent protrusions 1221, and the gaps 1231 are configured to accommodate end portions of the heat exchange plates 31.

The plurality of heat exchange plates 31 can achieve a temperature adjusting effect on the plurality of battery cells 20. The battery cells 20 and the heat exchange plates 31 are both located in the accommodating space 13. However, different from the battery cells 20, the end portions of the heat exchange plates 31 partially protrude from the accommodating space 13. **In** order to avoid the end portions of the heat exchange plates 31, in the embodiment of the present application, the plurality of protrusions 1221 are arranged at intervals, thereby forming gaps 1231 that can accommodate the end portions of the heat exchange plates 31 between adjacent protrusions 1221. Furthermore, the existence of the gaps 1231 not only has an avoidance effect, but also has limiting and positioning effects on the positions of the heat exchange plates 31 and the battery cells 20 to a certain extent. Therefore, during the preparation process of the battery, the positions of the battery cells 20 can be determined by inserting the end portions of the heat exchange plates 31 into the gaps 1231.

In some embodiments, the heat management component 30 includes manifolds 32, the plurality of heat exchange plates are communicated by the manifolds 32, and the manifold 32 is at least partially located in the avoidance space 1232.

In the embodiment of the present application, the manifolds 32 can achieve the communication of the plurality of heat exchange plates 31. The manifold 32 is usually located between the battery cell 20 and the beam main body 121, and the reinforcing portion 122 is also located between the battery cell 20 and the beam main body 121. On this basis, in the embodiment of the present application, the first plate body 1221a is tilted relative to the second plate body 1221b so as to form the avoidance space 1232 for avoiding the manifolds 32 on the side of the first plate body 1221a away from the base plate 11, thereby effectively using the space between the battery cell 20 and the beam main body 121.

According to a third aspect, an embodiment of the present application provides an electrical apparatus, including the battery according to any of the above embodiments.

It should be noted that the electrical apparatus provided in the embodiment of the present application has the beneficial effects of the battery in any of the above embodiments. Specifically, referring to the above description for the battery, details are not repeated in the embodiment of the present application.

According to some embodiments of the present application, as shown in FIG. 2 to FIG. 6, the battery includes a box body 400, battery cells 20, and a heat management component 30. The box body 400 includes a base plate 11 and a plurality of side beams 12, the side beams 12 are connected to the base plate 11, and an accommodating space 13 is defined by the side beams 12 and the base plate 11. At least one side beam 12 includes a beam main body 121 and a reinforcing portion 122, and the reinforcing portion 122 protrudes from the surface of the beam main body 121 facing the accommodating space 13. The reinforcing portion 122 includes a plurality of protrusions 1221 arranged at equal intervals along the extension direction of the beam main body 121, and gaps 1231 are formed between adjacent protrusions 1221. The protrusion 1221 includes a first plate body 1221a and a second plate body 1221b connected to each other. The first plate body 1221a is located on the side of the second plate body 1221b away from the base plate 11. The first plate body 1221a intersects with the second plate body 1221b. An avoidance space 1232 is formed on the side of the first plate body 1221a away from the base plate 11.

The heat management component 30 includes a plurality of heat exchange plates 31 arranged at intervals and manifolds 32 for communicating the plurality of heat exchange plates 31. The gap 1231 is configured to accommodate the end portion of the heat exchange plate 31, and the manifold 32 is at least partially located in the avoidance space 1232.

It should be noted that in the case of no conflict, embodiments in the present application and features in the embodiments may be combined with each other.

Finally, it should be noted that the above embodiments are merely used for describing the technical solutions of the present application, instead of limiting the present application. Although the present application is described in detail with reference to the above embodiments, those of ordinary skill in the art should understand that the technical solutions recorded in the above embodiments can still be modified, or some of the technical features therein can be equivalently substituted. However, these modifications or substitutions do not make the essence of the corresponding technical solutions depart from the spirit and scope of the technical solutions of the embodiments of the present application.

## Claims

1. **A box** body for a battery, comprising:
a base plate; and
a plurality of side beams connected to the base plate, an accommodating space being defined by the plurality of side beams and the base plate,
wherein at least one side beam comprises a beam main body and a reinforcing portion, the reinforcing portion protrudes from the surface of the beam main body facing the accommodating space, the reinforcing portion is provided with an avoidance structure, and the avoidance structure is configured to avoid components accommodated in the accommodating space.

2. The box body according to claim 1, wherein the reinforcing portion comprises a plurality of protrusions arranged at intervals, and the plurality of protrusions are arranged at intervals along an extension direction of the beam main body.

3. The box body according to claim 2, wherein the plurality of protrusions are arranged at equal intervals along the extension direction of the beam main body.

4. The box body according to claim 2 or 3, wherein the avoidance structure comprises a gap formed between two adjacent protrusions, and in the extension direction of the beam main body, the minimum width of the gap is L1, where 1 mm ≤ L1 ≤ 1500 mm.

5. The box body according to claim 4, wherein 5 mm ≤ L1 ≤ 20 mm.

6. The box body according to claim 2, wherein the protrusion comprises a first plate body and a second plate body connected to each other, the first plate body is located on the side of the second plate body away from the base plate, and the first plate body intersects with the second plate body; and
the avoidance structure comprises an avoidance space located on the side of the first plate body away from the base plate.

7. The box body according to claim 6, wherein the second plate body extends along a thickness direction of the base plate and abuts against the base plate.

8. The box body according to claim 6 or 7, wherein an accommodating cavity is defined by the first plate body, the second plate body and the beam main body together, and the protrusion further comprises a reinforcing rib arranged in the accommodating cavity.

9. The box body according to any one of claims 1 to 8, wherein the plurality of side beams comprise two first side beams and two second side beams, the two first side beams are arranged at an interval along a width direction of the box body, and the two second side beams are arranged at an interval along a length direction of the box body;
each second side beam is connected to the two first side beams; and each first side beam comprises the beam main body and the reinforcing portion.

10. The box body according to claim 9, wherein the reinforcing portion comprises a plurality of protrusions arranged at intervals along the length direction; and
in the length direction, the minimum width of the gap between two adjacent protrusions is L1, the maximum size of the box body is L2, and L1 and L2 meet: 0.0002≤L1/L2≤0.5.

11. The box body according to claim 10, wherein 0.001<L1/L2≤0.3.

12. A battery, comprising:
the box body according to any one of claims 1 to 11; and
battery cells accommodated in the accommodating space.

13. The battery according to claim 12, further comprising a heat management component accommodated in the accommodating space, wherein the avoidance structure is configured to avoid at least a portion of the heat management component.

14. The battery according to claim 13, wherein the heat management component comprises a plurality of heat exchange plates arranged at intervals, and battery cells are arranged between adjacent heat exchange plates; and
the reinforcing portion comprises a plurality of protrusions arranged at intervals, the avoidance structure comprises gaps located between two adjacent protrusions, and the gaps are configured to accommodate end portions of the heat exchange plates.

15. The battery according to claim 14, wherein the heat management component comprises manifolds, and the plurality of heat exchange plates communicate through the manifolds;
the protrusion comprises a first plate body and a second plate body connected to each other, the first plate body is located on the side of the second plate body away from the base plate, and the first plate body intersects with the second plate body; and
the avoidance structure comprises an avoidance space located at the side of the first plate body away from the base plate, and the manifolds are at least partially located in the avoidance space.

16. An electrical apparatus, comprising the battery according to any one of claims 12 to 15, wherein the battery is configured to provide electric energy.
